# EUROPEAN PATENT SPECIFICATION

(11) **EP 3 738 114 B1**
(45) Date of publication and mention of the grant of the patent: **20.11.2024**
(21) Application number: 19702504.2
(22) Date of filing: 07.01.2019
(51) Int. Cl.: G08G 5/00, G06V 20/00

(54) **IDENTIFYING LANDING ZONES FOR LANDING OF A ROBOTIC VEHICLE**
IDENTIFIZIERUNG VON LANDEZONEN FÜR DIE LANDUNG EINES ROBOTERFAHRZEUGS
IDENTIFICATION DE ZONES D'ATTERRISSAGE POUR L'ATTERRISSAGE D'UN VÉHICULE ROBOTISÉ

(30) Priority: 10.01.2018 IN 201841001137
(43) Date of publication of application: 18.11.2020
(73) Proprietor: QUALCOMM INCORPORATED, San Diego, California 92121-1714 (US)
(72) Inventor: KASILYA SUDARSAN, Vishnu Vardhan, San Diego, California 92121-1714 (US); TAVEIRA, Michael Franco, San Diego, California 92121-1714 (US); RAGHAVENDRAN, Sathiya Narayanan, San Diego, California 92121-1714 (US)
(74) Representative: Schmidbauer, Andreas Konrad
(86) International application number: PCT/US2019/012504
(87) International publication number: WO 2019/139845

(56) References cited:
- EP-B1- 0 743 580
- US-A1- 2013 179 059
- US-A1- 2016 229 554
- US-A1- 2017 045 894
- US-A1- 2017 162 061
- US-A1- 2017 162 062
- US-B1- 8 565 944

## Description

### BACKGROUND

Robotic vehicles are increasingly used for a wide range of applications, including personal, commercial and government applications. A robotic vehicle may be provided a task or a mission, and may autonomously or semi-autonomously execute one or more aspects of the task or mission. The range of applications of robotic vehicles, such as unmanned drones, is increasingly wide, and may include rapid delivery of packages, medicine, or other supplies; remote sensing of storms and environmental conditions; 3-D mapping operations; inspection of farm crops or inaccessible equipment; photography for sporting events, journalism, law enforcement; monitoring of remote or migratory wildlife; search and rescue missions; and other purposes.

Robotic vehicles may have particular applications in environments that are distant, dangerous, or difficult for people to access. While in transit, robotic vehicles may face various unforeseen circumstances that may require the robotic vehicle to discontinue the task or mission entirely or temporarily. Such situations may include changing environmental and/or weather conditions, battery issues, mechanical or electrical failures, and other similar circumstances that make continuing a task or mission undesirable, at least for a period of time. In such situations, the robotic vehicle needs to land at a location and either await assistance or further instructions to continue with the mission or return home.
Attention is drawn to document US 2017/162062 A1, which describes a method to guide and navigate an aircraft during a complete engine failure. Nearby airport data is obtained based on aircraft current location upon detecting the complete aircraft engine failure. Minimum and maximum glide distances of the aircraft are computed based on the current aircraft state parameters and environmental parameters. Candidate reachable airports are determined using the obtained nearby airport data for safe landing based on the computed minimum and maximum glide distances. A glide path for each candidate reachable airport is determined. The aircraft is navigated and guided to a selected one of the candidate reachable airports using an associated glide path.
Attention is also drawn to document US 8,565,944 B1. Here technologies are described for providing a list of alternate diversion airports that is based on up-to-date and accurate information received electronically at the aircraft. The list of alternate diversion airports may be prioritized according to a normal mode when the aircraft is operating under normal flight conditions, or a non-normal mode when the aircraft is operating in an emergency situation. In one aspect of the present disclosure, a system includes an alternate airport diversion planner program that generates the list of alternate diversion airports based on diversion planning information received at an aircraft. The alternate airport diversion planner program subsequently receives periodic updates of the diversion planning information, which is used to update the list of alternate diversion airports that is provided to a pilot of the aircraft. Attention is further drawn to document US2013035810A1 which discloses a method and system to autonomously direct aircraft to emergency-contingency landing sites using on-board sensors.

### SUMMARY

In accordance with the present invention, a method of identifying landing zones and a robotic vehicle, as set forth in the independent claims, is provided. Embodiments of the invention are claimed in the dependent claims.

In some embodiments, identifying one or more landing zones may include identifying a safe landing zone that meets a threshold safety requirement. In some embodiments, identifying a safe landing zone may include determining one or more characteristics of the landing zone and determining if the characteristics of the landing zone meet the threshold safety requirement. In some embodiments, the one or more characteristics may include one or more of population density, terrain details, visibility, environmental conditions, and size. In some embodiments, identifying one or more landing zones may include receiving one or more potential landing zones from one or more of a remote server and another robotic vehicle. In some embodiments, identifying one or more landing zones may include retrieving one or more historical landing zones associated with a similar trip.

In some embodiments, a threshold number of landing zones may be identified at any given time. In some embodiments, the method may include updating the one or more stored landing zones.

In some embodiments, selecting the landing zone may include determining one or more characteristics for each of the one or more identified landing zones, determining information regarding the emergency event, determining information regarding current conditions and selecting one of the one or more identified landing zones based on one or more of the one or more characteristics of the one or more stored landing zones, the information regarding the emergency event, and information regarding current conditions. In some embodiments, information regarding the emergency event may include one or more of an urgency and emergency type.

In some embodiments, the robotic vehicle may be travelling in a path of travel to reach a destination and the landing zone may not be a preplanned landing zone in the path of travel.

In some embodiments, the processor may be further configured with processor-executable instructions such that identifying one or more landing zones includes identifying a safe landing zone that meets a threshold safety requirement. In some embodiments, the processor may be further configured with processor-executable instructions such that identifying a safe landing zone includes determining one or more characteristics of the landing zone and determining if the characteristics of the landing zone meets the threshold safety requirement.

### BRIEF DESCRIPTION OF THE DRAWINGS

The accompanying drawings, which are incorporated herein and constitute part of this specification, illustrate example embodiments, and together with the general description given above and the detailed description given below, serve to explain the features of various embodiments.
FIG. 1 is a system block diagram of a robotic vehicle operating within a communication system according to various embodiments.
FIG. 2 is a component block diagram illustrating components of a robotic vehicle according to various embodiments.
FIG. 3 is a component block diagram illustrating a processing device according to various embodiments.
FIG. 4 is a process flow diagram illustrating a method of identifying landing zones for landing of a robotic vehicle, according to various embodiments.
FIG. 5 is a process flow diagram illustrating a method of identifying and storing landing zones for a robotic vehicle in association with a trip, according to various embodiments.

### DETAILED DESCRIPTION

Various embodiments will be described in detail with reference to the accompanying drawings. Wherever possible, the same reference numbers will be used throughout the drawings to refer to the same or like parts. References made to particular examples and embodiments are for illustrative purposes, and are not intended to limit the scope of the invention, which is defined by the appended claims.

As used herein, the terms "robotic vehicle" and "drone" refer to one of various types of vehicles including an onboard computing device configured to provide some autonomous or semi-autonomous capabilities. Examples of robotic vehicles include but are not limited to: aerial vehicles, such as an unmanned aerial vehicle (UAV); ground vehicles (e.g., an autonomous or semi-autonomous car, a vacuum robot, etc.); water-based vehicles (i.e., vehicles configured for operation on the surface of the water or under water); space-based vehicles (e.g., a spacecraft or space probe); and/or some combination thereof. In some embodiments, the robotic vehicle may be manned. In other embodiments, the robotic vehicle may be unmanned. In embodiments in which the robotic vehicle is autonomous, the robotic vehicle may include an onboard computing device configured to maneuver and/or navigate the robotic vehicle without remote operating instructions (i.e., autonomously), such as from a human operator (e.g., via a remote computing device). In embodiments in which the robotic vehicle is semi-autonomous, the robotic vehicle may include an onboard computing device configured to receive some information or instructions, such as from a human operator (e.g., via a remote computing device), and autonomously maneuver and/or navigate the robotic vehicle consistent with the received information or instructions. In some implementations, the robotic vehicle may be an aerial vehicle (unmanned or manned), which may be a rotorcraft or winged aircraft. For example, a rotorcraft (also referred to as a multirotor or multicopter) may include a plurality of propulsion units (e.g., rotors/propellers) that provide propulsion and/or lifting forces for the robotic vehicle. Specific non-limiting examples of rotorcraft include tricopters (three rotors), quadcopters (four rotors), hexacopters (six rotors), and octocopters (eight rotors). However, a rotorcraft may include any number of rotors. A robotic vehicle may include a variety of components and/or payloads that may perform a variety of functions. The term "components" when used with respect to a robotic vehicle includes robotic vehicle components and/or robotic vehicle payloads.

Robotic vehicles may have particular applications in environments that are distant, dangerous, or difficult for people to access. While in transit, robotic vehicles may face various unforeseen circumstances that may require the robotic vehicle to discontinue the task or mission at least for some time. Such situations may include changing environmental and/or weather conditions, battery issues, mechanical or electrical failures and other similar circumstances that make continuing a task or mission undesirable. In such situations, the robotic vehicle may need to land at a location and either await assistance or further instructions to continue with the mission or return home.

In response to such events, the robotic vehicle may identify a landing zone to land. An appropriate landing zone may for example include a landing zone that is safe for landing. A landing zone may be determined to be safe when it meets one or more criteria including being hazard free, having a certain live population density (e.g., human, animal and/or plants), having a suitable terrain and/or being large enough to fit the robotic vehicle. In some examples, after the emergency event has occurred, the processor of the robotic vehicle may determine an appropriate landing zone for landing the robotic vehicle. In some examples, after detecting the emergency, the robotic vehicle may use on-board sensors, cameras, and/or other onboard equipment to scan the area for safe zones. According to some examples, the robotic vehicle may request a safe landing zone from a remote server or another source such as other robotic vehicles. In such circumstances, the robotic vehicle may have some delay in identifying a safe landing zone that is appropriate for landing. Due to time constraints, the robotic vehicle may only have enough time to identify a single landing zone (if any at all). In some situations, the landing zone identified may not be the most optimal landing zone that is available for the robotic vehicle, but due to time constraints the robotic vehicle is often not able to look for and identify a more optimal landing zone. Therefore, it is beneficial to allow robotic vehicles to actively monitor for landing zones while in transit, and before an emergency event has occurred, and thus, be prepared for an emergency landing before an emergency event occurs.

Various embodiments include methods and systems for identifying landing zones for landing of a robotic vehicle. Some embodiments may include identifying potential landing zones that are appropriate for landing in the event that landing is required (e.g., during an emergency). In some embodiments, the identification of a landing zone occurs as the robotic vehicle travels (e.g., through a path) and without waiting for an indication that the emergency event will occur. Some embodiments may include the processor of the robotic vehicle identifying one or more landing zones for landing while in transit. In some examples, the processor of the robotic vehicle may monitor for landing zones while in transit.

For example, the robotic vehicle may be travelling through a path. In some embodiments, the robotic vehicle may have a predefined path for travel. In another example, the path may be determined based on various criteria as the robotic vehicle is in transit. While the robotic vehicle is travelling through the path, the processor of the robotic vehicle may monitor for potential landing zones. In some examples, the monitoring may occur continuously or based on certain criteria. In some examples, the frequency of monitoring may also be determined based on same or different criteria. These criteria may be user- or system-defined criteria and may include various triggers or conditions. In some examples, the robotic vehicle may determine when to begin to monitor for landing zones and/or the frequency at which to monitor for landing zones based on detecting certain conditions. For example, the robotic vehicle may detect certain conditions that may cause the robotic vehicle to start or stop monitoring for potential landing zones and/or increase or decrease its monitoring frequency. The conditions may for example include circumstances that alert the robotic vehicle that the probability of the robotic vehicle needing to land is higher than a certain threshold. In some embodiments, the circumstances may include (but is not limited to) time or distance of travel, location, time of day, changes in environmental conditions, changes in the details of the task or mission of the robotic vehicle, changes in the path of the robotic vehicle, and/or changes in the condition of the robotic vehicle itself (e.g., battery level, mechanical, electrical or system conditions, etc.).

Other criteria may also be defined either before or during transit, that may trigger monitoring for landing zones, and/or a change in the frequency of monitoring for landing zones. For example, the robotic vehicle may begin monitoring for landing zones as soon as the robotic vehicle begins transit at a certain frequency and may adjust the frequency at which the robotic vehicle monitors for landing zones during transit as the robotic vehicle detects different conditions. Alternatively, the robotic vehicle may begin monitoring after it has travelled a certain amount of time or distance and/or detected certain conditions and may then set a frequency and/or adjust its frequency of monitoring based on detected conditions. Monitoring for landing zones may include using sensors, cameras, and other equipment of the robotic vehicle to identify landing zones. In some examples, landing zones may be received at the robotic vehicle from a remote source such as a server or other robotic vehicles. In other examples, the robotic vehicle may also have access to historical landing zones. For example, historical landing zones may include landing zones used in the past by the robotic vehicle and/or by other robotic vehicles or servers. In one example, the historical landing zones may be identified based on the current status of the robotic vehicle (e.g., current conditions such as time and location of the robotic vehicle, environmental conditions, etc.). The robotic vehicle, in some examples, may access the historical landing zones when monitoring for landing zones.

According to some embodiments, while monitoring for landing zones, the processor of the robotic vehicle identifies a landing zone. In some examples, the landing zone(s) identified may be selected from among one or more landing zones identified using camera, sensors, or other equipment of the robotic vehicle; landing zones received from a server or other robotic vehicles; and/or historical landing zones. In some embodiments, the processor of the robotic vehicle may determine whether the identified landing zone meets certain threshold requirements. For example, the robotic vehicle may determine if the identified landing zone meets certain threshold safety requirements such as a population density (e.g., a density of people, animals, plants, objects, etc.), a certain terrain, land size, visibility, environmental conditions, and/or other characteristics that make the landing zone appropriate for landing in case of an event that requires landing of the robotic vehicle. In one example, if the robotic vehicle meets the threshold criteria, the identified zone may be designated as a safe landing zone. In one example, the criteria may be used to determine a safety score or indication for the landing zone and the landing zone may be determined to be an appropriate or safe landing zone when the landing zone has a safety score that meets a threshold safety score.

The processor of the robotic vehicle may determine whether to store the identified landing zone(s) in association with the trip. Some embodiments may include the processor of the robotic vehicle determining if one or more other landing zones are already stored in association with the current trip. In some embodiments, if there are no other landing zones stored, and the landing zone meets certain threshold criteria (e.g., has a certain safety score or indication), the processor of the robotic vehicle may store the landing zone in association with the trip.

In some examples, only a specific number of landing zones may be stored with association with a trip at any given time. In such examples, if one or more other landing zones are already stored, the processor of the robotic vehicle may determine if the number of landing zones already stored is above the threshold number of landing zones. If so, the processor of the robotic vehicle may determine whether to replace at least one of the stored landing zones with the identified landing zone. For example, the stored landing zones may be compared with the identified landing zone to determine if the identified landing zone is more appropriate for landing the robotic vehicle and therefore should replace one or more of the store landing zones.

Comparison of the landing zones may be based on various safety criteria such as (but not limited to) location, population density, terrain, land size, visibility, environmental conditions, and/or other variables that indicate the condition of the landing zone and whether it is appropriate for landing of a robotic vehicle. In some examples, such information may be determined and/or stored with respect to each of the stored and/or identified landing zones and used in comparing the identified landing zone to the one or more stored landing zones. In some examples, a score may be calculated based on such information and the score may be compared when comparing the landing zones. If, based on the comparison, it is determined that the identified landing zone is more optimal for landing than at least one stored landing zone, the landing zone is stored in association with the trip.

In other examples, the processor of the robotic vehicle may store any identified landing zones that have certain characteristics that make them optimal for landing the robotic vehicle (e.g., a certain safety score). In such examples, the processor of the robotic vehicle may determine, based on the information associated with the landing zone if the landing zone is an appropriate landing zone (e.g., a safe landing zone) and may store the landing zone regardless of the number of other landing zones already stored. In some examples, the stored landing zones may be periodically updated such that only landing zones that are appropriate for landing based the current condition of the robotic vehicle are maintained within storage (e.g., those within the vicinity of the landing zone with certain conditions). Current conditions may include (but are not limited to) current status of the robotic vehicle (e.g., battery level, mechanical and electrical status, etc.), time, location of the robotic vehicle, current environmental conditions, and/or other information regarding the current conditions of the robotic vehicle. In some examples, the robotic vehicle may return to monitoring for landing zones and identify other potential landing zones after storing the identified landing zone. In some examples, the monitoring is ongoing during the process of identifying and storing the landing zone.

In some embodiments, during transit the processor of the robotic vehicle may detect an emergency event requiring landing of the robotic vehicle. Various events may require landing of the robotic vehicle such as (but not limited to) changes in environmental conditions, changes in details of the task or mission of the robotic vehicle, changes in the path of the robotic vehicle, battery issues, mechanical or electrical failures, or any other situations that make it unsafe or undesirable for the robotic vehicle to continue in its path, at least for a certain period of time. The determination of an emergency event may be made by the robotic vehicle itself (e.g., by the processor and/or based on sensors of the robotic vehicle), and/or may be based on receiving alerts or commands from a server, other robotic vehicles, and/or any other source.

In response to detecting the emergency event, in some embodiments, the processor of the robotic vehicle may access the one or more stored landing zones and may select a landing zone from the stored landing zones. The selection of the landing zone may be based on the information associated with the landing zone, current conditions, and/or the event characteristics. Landing zone information, as described above, may include (but is not limited to) population density (e.g., a density of people, animals, plants, objects, etc.), terrain, land size, visibility, environmental conditions, and/or other similar characteristics relating to the nature of the landing zone. Current conditions may include (but is not limited to) current status of the robotic vehicle (e.g., battery level, mechanical and electrical status, etc.), time, location of the robotic vehicle, current environmental conditions, etc. Event characteristics may include (but is not limited to) the type of the event, the source of the event, the urgency of the event, etc.

Based on one or more of these criteria, the processor of the robotic vehicle may select an appropriate landing zone from the stored landing zones previously identified for landing in response to the emergency event. In some examples, the most appropriate landing zone may be the landing zone having the most optimal conditions with respect to the current conditions. For example, where the emergency event is urgent and requires immediate landing, the most optimal landing zone may be the landing zone that is closest geographically and meets minimum safety requirements. In another example, where the emergency event is not as urgent, the most optimal landing zone may be the landing zone having the highest safety score. A safety score may be calculated based on the information for each stored landing zone as described in more detail above. Therefore, in some embodiments, a selection is made by the processor of the robotic vehicle based on the characteristics of the landing zones and the current conditions.

In some embodiments, the processor of the robotic vehicle controls the robotic vehicle to land at the selected landing zone after the landing zone has been selected. Certain embodiments may thus enable the robotic vehicle processor to identify a landing zone before an emergency event for landing of the robotic vehicle if or when the emergency event occurs.

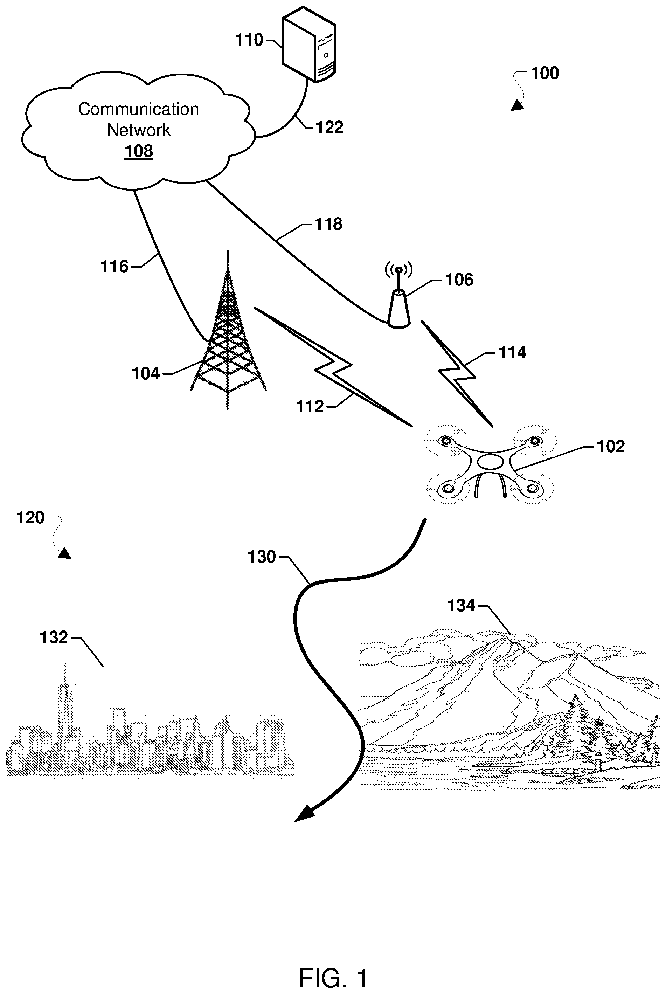

Various embodiments may be implemented within a robotic vehicle operating within a variety of communication systems 100, an example of which is illustrated in FIG. 1. With reference to FIG. 1, the communication system 100 may include a robotic vehicle 102, a base station 104, an access point 106, a communication network 108, and a network element 110.

The base station 104 and the access point 106 may provide wireless communications to access the communication network 108 over a wired and/or wireless communication backhaul 116 and 118, respectively. The base station 104 may include base stations configured to provide wireless communications over a wide area (e.g., macro cells), as well as small cells, which may include a micro cell, a femto cell, a pico cell, and other similar network access points. The access point 106 may be configured to provide wireless communications over a relatively smaller area. Other examples of base stations and access points are also possible.

The robotic vehicle 102 may communicate with the base station 104 over a wireless communication link 112 and with the access point 106 over a wireless communication link 114. The wireless communication links 112 and 114 may include a plurality of carrier signals, frequencies, or frequency bands, each of which may include a plurality of logical channels. The wireless communication links 112 and 114 may utilize one or more radio access technologies (RATs). Examples of RATs that may be used in a wireless communication link include 3GPP Long Term Evolution (LTE), 3G, 4G, 5G, Global System for Mobility (GSM), Code Division Multiple Access (CDMA), Wideband Code Division Multiple Access (WCDMA), Worldwide Interoperability for Microwave Access (WiMAX), Time Division Multiple Access (TDMA), and other mobile telephony communication technologies cellular RATs. Further examples of RATs that may be used in one or more of the various wireless communication links within the communication system 100 include medium range protocols such as Wi-Fi, LTE-U, LTE-Direct, LAA, MuLTEfire, and relatively short-range RATs such as ZigBee, Bluetooth, and Bluetooth Low Energy (LE).

The network element 110 may include a network server or another similar network element. The network element 110 may communicate with the communication network 108 over a communication link 122. The robotic vehicle 102 and the network element 110 may communicate via the communication network 108. The network element 110 may provide the robotic vehicle 102 with a variety of information, such as navigation information, weather information, information about environmental conditions, movement control instructions, safe landing zones, and other information, instructions, or commands relevant to operations of the robotic vehicle 102.

In various embodiments, the robotic vehicle 102 may move in, around, or through an environment 120 along a path of travel 130. The environment 120 may include a variety of terrain, such as an urban terrain 132, a natural terrain 134, and the like. While travelling along the path of travel 130 the robotic vehicle 102 may experience various events that require the robotic vehicle to land, at least for some time. As the robotic vehicle is in transit (e.g., travelling along the path of travel 130), the robotic vehicle may need to discontinue the trip and land. In such examples, a deviation from the predefined path of travel may be required. Some embodiments include identifying a landing zone that is not included in the path of travel 130 for landing of the robotic vehicle in an emergency event.

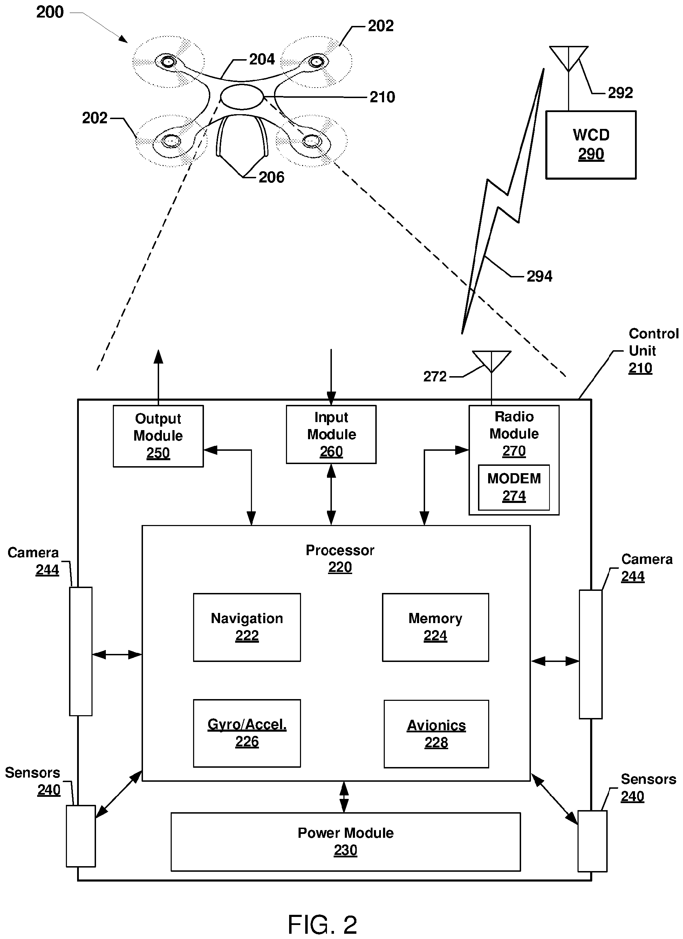

Robotic vehicles may include winged or rotorcraft varieties of aerial robotic vehicles. FIG. 2 illustrates an example of an aerial robotic vehicle 200 that utilizes multiple rotors 202 driven by corresponding motors to provide lift-off (or take-off) as well as other aerial movements (e.g., forward progression, ascension, descending, lateral movements, tilting, rotating, etc.). The robotic vehicle 200 is illustrated as an example of a robotic vehicle that may utilize various embodiments, but is not intended to imply or require that various embodiments are limited to aerial robotic vehicles or rotorcraft robotic vehicles. Various embodiments may be used with winged robotic vehicles, land-based autonomous vehicles, water-borne autonomous vehicles, and space-based autonomous vehicles.

With reference to FIGS. 1 and 2, the robotic vehicle 200 may be similar to the robotic vehicle 102. The robotic vehicle 200 may include a number of rotors 202, a frame 204, and landing columns 206 or skids. The frame 204 may provide structural support for the motors associated with the rotors 202. The landing columns 206 may support the maximum load weight for the combination of the components of the robotic vehicle 200 and, in some cases, a payload. For ease of description and illustration, some detailed aspects of the robotic vehicle 200 are omitted such as wiring, frame structure interconnects, or other features that would be known to one of skill in the art. For example, while the robotic vehicle 200 is shown and described as having a frame 204 having a number of support members or frame structures, the robotic vehicle 200 may be constructed using a molded frame in which support is obtained through the molded structure. While the illustrated robotic vehicle 200 has four rotors 202, this is merely exemplary and various embodiments may include more or fewer than four rotors 202.

The robotic vehicle 200 may further include a control unit 210 that may house various circuits and devices used to power and control the operation of the robotic vehicle 200. The control unit 210 may include a processor 220, a power module 230, sensors 240, one or more cameras 244, an output module 250, an input module 260, and a radio module 270.

The processor 220 may be configured with processor-executable instructions to control travel and other operations of the robotic vehicle 200, including operations of various embodiments. The processor 220 may include or be coupled to a navigation unit 222, a memory 224, a gyro/accelerometer unit 226, and an avionics module 228. The processor 220 and/or the navigation unit 222 may be configured to communicate with a server through a wireless connection (e.g., a cellular data network) to receive data useful in navigation, provide real-time position reports, and assess data.

The avionics module 228 may be coupled to the processor 220 and/or the navigation unit 222, and may be configured to provide travel control-related information such as altitude, attitude, airspeed, heading, and similar information that the navigation unit 222 may use for navigation purposes, such as dead reckoning between Global Navigation Satellite System (GNSS) position updates. The gyro/accelerometer unit 226 may include an accelerometer, a gyroscope, an inertial sensor, or other similar sensors. The avionics module 228 may include or receive data from the gyro/accelerometer unit 226 that provides data regarding the orientation and accelerations of the robotic vehicle 200 that may be used in navigation and positioning calculations, as well as providing data used in various embodiments for processing images.

The processor 220 may further receive additional information from the sensors 240, such as an image sensor or optical sensor (e.g., a sensor capable of sensing visible light, infrared, ultraviolet, and/or other wavelengths of light). The sensors 240 may also include a radio frequency (RF) sensor, a barometer, a humidity sensor, a sonar emitter/detector, a radar emitter/detector, a microphone or another acoustic sensor, a lidar sensor, a time-of-flight (TOF) 3-D camera, or another sensor that may provide information usable by the processor 220 for movement operations, navigation and positioning calculations, and determining environmental conditions. The sensors 240 may be configured to monitor for and identify landing zones for landing the robotic vehicle in response to an emergency event.

The power module 230 may include one or more batteries that may provide power to various components, including the processor 220, the sensors 240, the one or more cameras 244, the output module 250, the input module 260, and the radio module 270. In addition, the power module 230 may include energy storage components, such as rechargeable batteries. The processor 220 may be configured with processor-executable instructions to control the charging of the power module 230 (i.e., the storage of harvested energy), such as by executing a charging control algorithm using a charge control circuit. Alternatively or additionally, the power module 230 may be configured to manage its own charging. The processor 220 may be coupled to the output module 250, which may output control signals for managing the motors that drive the rotors 202 and other components.

The robotic vehicle 200 may be controlled through control of the individual motors of the rotors 202 as the robotic vehicle 200 progresses toward a destination. The processor 220 may receive data from the navigation unit 222 and use such data in order to determine the present position and orientation of the robotic vehicle 200, as well as the appropriate course towards the destination or intermediate sites. In various embodiments, the navigation unit 222 may include a GNSS receiver system (e.g., one or more global positioning system (GPS) receivers) enabling the robotic vehicle 200 to navigate using GNSS signals. Alternatively or in addition, the navigation unit 222 may be equipped with radio navigation receivers for receiving navigation beacons or other signals from radio nodes, such as navigation beacons (e.g., very high frequency (VHF) omni-directional range (VOR) beacons), Wi-Fi access points, cellular network sites, radio station, remote computing devices, other robotic vehicles, etc.

The radio module 270 may be configured to receive navigation signals, such as signals from aviation navigation facilities, etc., and provide such signals to the processor 220 and/or the navigation unit 222 to assist in robotic vehicle navigation. In various embodiments, the navigation unit 222 may use signals received from recognizable RF emitters (e.g., AM/FM radio stations, Wi-Fi access points, and cellular network base stations) on the ground.

The navigation unit 222 may include an emergency landing application that may perform calculations to plan and/or modify a path of travel for the robotic vehicle within a volumetric space. In some embodiments, the emergency landing application may perform dynamic path planning while in transit including identifying landing zones for landing the robotic vehicle during an emergency event. In some embodiments, the emergency landing application may monitor for landing zones while in transit and identify and store landing zones during transit. In response to detection of an emergency event, in some examples, the emergency landing application selects a landing zone for landing the robotic vehicle from the stored landing zones. In some examples, the identified and/or stored landing zones are not a preplanned landing zone in the preplanned path of travel and may provide a modification to a predefined path of travel.

The radio module 270 may include a modem 274 and a transmit/receive antenna 272. The radio module 270 may be configured to conduct wireless communications with a variety of wireless communication devices (e.g., a wireless communication device (WCD) 290), examples of which include a wireless telephony base station or cell tower (e.g., the base station 104), a network access point (e.g., the access point 106), a beacon, a smartphone, a tablet, another robotic vehicle, or another computing device with which the robotic vehicle 200 may communicate (such as the network element 110). The processor 220 may establish a bi-directional wireless communication link 294 via the modem 274 and the antenna 272 of the radio module 270 and the wireless communication device 290 via a transmit/receive antenna 292. In some embodiments, the radio module 270 may be configured to support multiple connections with different wireless communication devices using different radio access technologies.

In various embodiments, the wireless communication device 290 may be connected to a server through intermediate access points. In an example, the wireless communication device 290 may be a server of a robotic vehicle operator, a third-party service (e.g., package delivery, billing, etc.), or a site communication access point. The robotic vehicle 200 may communicate with a server through one or more intermediate communication links, such as a wireless telephony network that is coupled to a wide area network (e.g., the Internet) or other communication devices. In some embodiments, the robotic vehicle 200 may include and employ other forms of radio communication, such as mesh connections with other robotic vehicles or connections to other information sources (e.g., balloons or other stations for collecting and/or distributing weather or other data harvesting information).

In various embodiments, the control unit 210 may be equipped with an input module 260, which may be used for a variety of applications. For example, the input module 260 may receive images or data from an onboard camera 244 or sensor, or may receive electronic signals from other components (e.g., a payload).

While various components of the control unit 210 are illustrated as separate components, some or all of the components (e.g., the processor 220, the output module 250, the radio module 270, and other units) may be integrated together in a single device or module, such as a system-on-chip module.

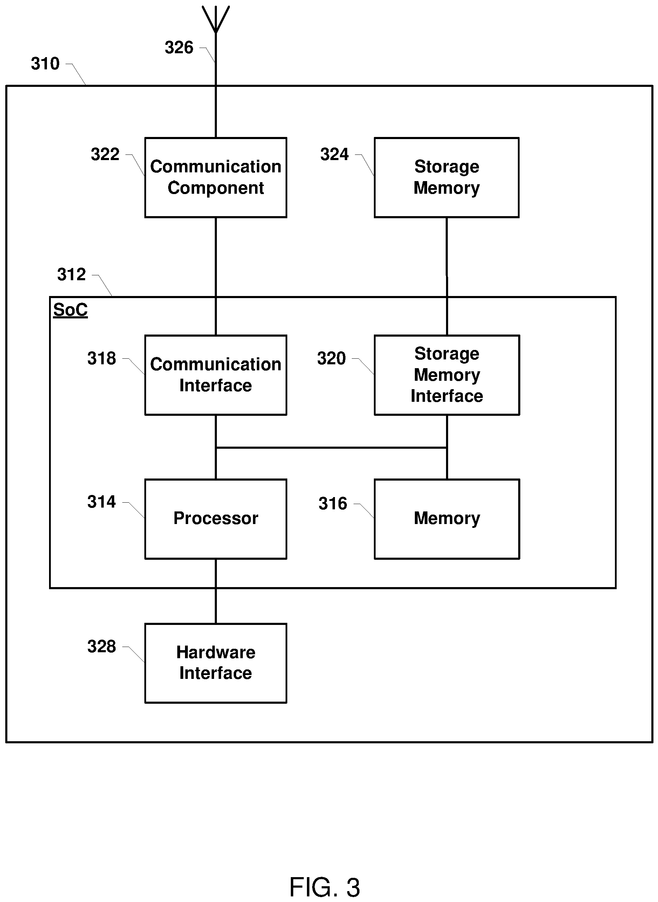

Various embodiments may be implemented within a processing device 310 configured to be used in a robotic vehicle. A processing device may be configured as or including a system-on-chip (SOC) 312, an example of which is illustrated FIG. 3. With reference to FIGS. 1-3, the SOC 312 may include (but is not limited to) a processor 314, a memory 316, a communication interface 318, and a storage memory interface 320. The processing device 310 or the SOC 312 may further include a communication component 322, such as a wired or wireless modem, a storage memory 324, an antenna 326 for establishing a wireless communication link, and/or the like. The processing device 310 or the SOC 312 may further include a hardware interface 328 configured to enable the processor 314 to communicate with and control various components of a robotic vehicle. The processor 314 may include any of a variety of processing devices, for example any number of processor cores.

The term "system-on-chip" (SOC) is used herein to refer to a set of interconnected electronic circuits typically, but not exclusively, including one or more processors (e.g., 314), a memory (e.g., 316), and a communication interface (e.g., 318). The SOC 312 may include a variety of different types of processors 314 and processor cores, such as a general purpose processor, a central processing unit (CPU), a digital signal processor (DSP), a graphics processing unit (GPU), an accelerated processing unit (APU), a subsystem processor of specific components of the processing device, such as an image processor for a camera subsystem or a display processor for a display, an auxiliary processor, a single-core processor, and a multicore processor. The SOC 312 may further embody other hardware and hardware combinations, such as a field programmable gate array (FPGA), an application-specific integrated circuit (ASIC), other programmable logic device, discrete gate logic, transistor logic, performance monitoring hardware, watchdog hardware, and time references. Integrated circuits may be configured such that the components of the integrated circuit reside on a single piece of semiconductor material, such as silicon.

The SOC 312 may include one or more processors 314. The processing device 310 may include more than one SOC 312, thereby increasing the number of processors 314 and processor cores. The processing device 310 may also include processors 314 that are not associated with an SOC 312 (i.e., external to the SOC 312). Individual processors 314 may be multicore processors. The processors 314 may each be configured for specific purposes that may be the same as or different from other processors 314 of the processing device 310 or SOC 312. One or more of the processors 314 and processor cores of the same or different configurations may be grouped together. A group of processors 314 or processor cores may be referred to as a multi-processor cluster.

The memory 316 of the SOC 312 may be a volatile or non-volatile memory configured for storing data and processor-executable instructions for access by the processor 314. The processing device 310 and/or SOC 312 may include one or more memories 316 configured for various purposes. One or more memories 316 may include volatile memories such as random-access memory (RAM) or main memory, or cache memory.

Some or all of the components of the processing device 310 and the SOC 312 may be arranged differently and/or combined while still serving the functions of the various aspects. The processing device 310 and the SOC 312 may not be limited to one of each of the components, and multiple instances of each component may be included in various configurations of the processing device 310.

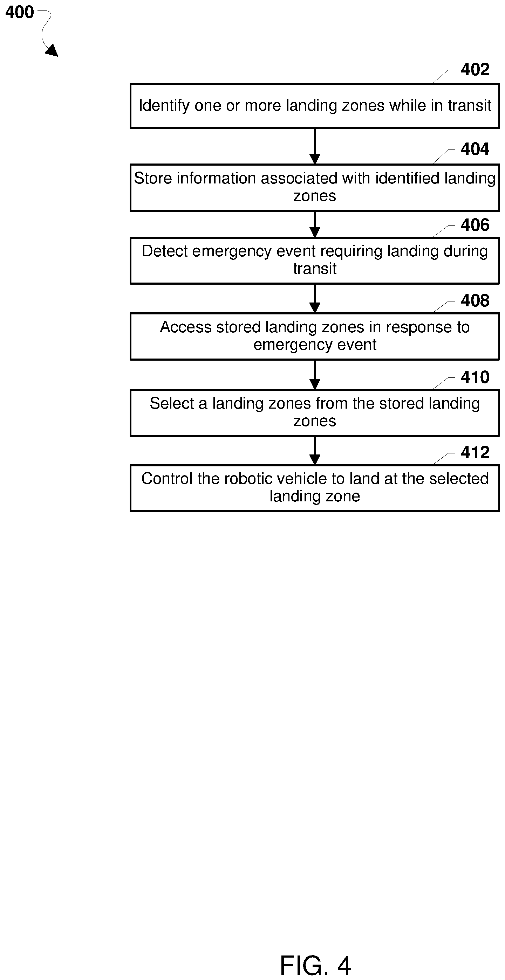

FIG. 4 illustrates a method for identifying landing zones for landing of a robotic vehicle, according to various embodiments. With reference to FIGS. 1-4, the method 400 may be implemented in hardware components and/or software components of the robotic vehicle (e.g., 102, 200), the operation of which may be controlled by one or more processors (e.g., the processor 220, 310, 314 and/or the like) of the robotic vehicle.

In block 402, the processor of the robotic vehicle may identify one or more landing zones while in transit. In some embodiments, the identification occurs as the robotic vehicle travels, for example, through a path, and without waiting for an indication that the emergency event will occur. Some embodiments may include the processor of the robotic vehicle identifying one or more landing zones for landing while in transit. In some examples, the processor of the robotic vehicle may monitor for landing zones while in transit.

For example, the robotic vehicle may be travelling through a path. In some embodiments, the robotic vehicle may have a predefined path for travel. In another example, the path may be determined based on various criteria as the robotic vehicle is in transit. In one example, while travelling through the path, the robotic vehicle may identify one or more landing zones. In one example, the landing zones may be identified using onboard sensors, cameras, and other equipment of the robotic vehicle. In another example, the landing zones may be received from a remote source such a remote server or other robotic vehicle communicatively coupled to the robotic vehicle. For example, as described above, one or more servers, and/or other devices such as other robotic vehicles may be communicatively coupled to the robotic vehicles and may communicate with the robotic vehicle to send various information. The robotic vehicle may obtain information regarding potential landing zones from these sources. In other examples, the robotic vehicle may also have access to historical landing zones. For example, historical landing zones may include landing zones used and/or in the past by the robotic vehicle and/or by other robotic vehicles or servers. In one example, the historical landing zones may be identified as potential landing zones based on the current status of the robotic vehicle (e.g., current conditions such as time and location of the robotic vehicle, environmental conditions, etc.).

In block 404, the processor of the robotic vehicle may store information associated with the identified landing zones. In some example embodiments, the processor of the robotic vehicle may identify landing zones appropriate for landing of the robotic vehicle along the path of the travel while in transit and may store one or more of the identified landing zones in storage for later use. In some examples, the robotic vehicle includes a local storage for storing the information associated with the identified landing zone.

In one example, the information associated with the identified landing zone may include an identifier of the landing zone along with other information such as geographic coordinates and/or characteristics of the landing zone. Characteristics of the landing zone may for example include information such as (but not limited to) population density (e.g., a density of people, animals, plants, objects, etc.), terrain details, land size, visibility, environmental conditions, and/or other characteristics regarding an identified landing zone.

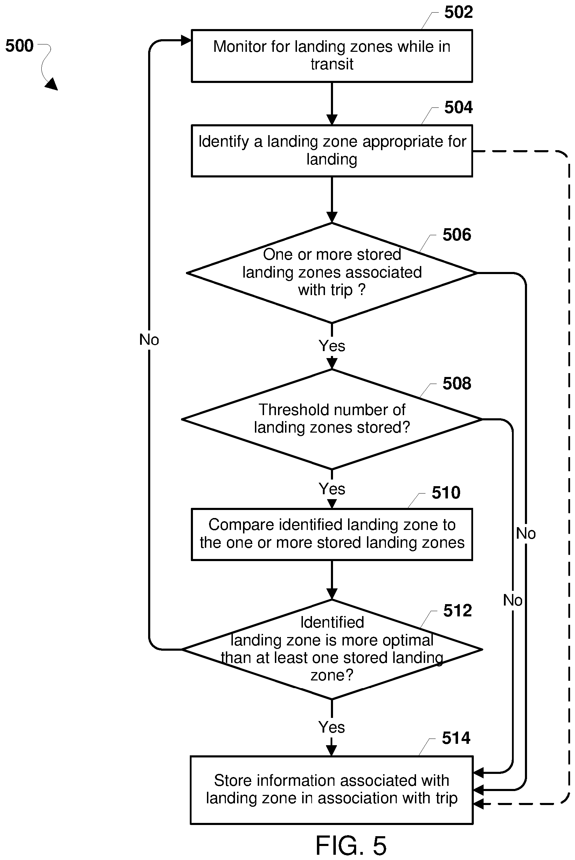

In some examples, information regarding identified landing zones may be used to determine if the landing zone is a safe landing zone. For example, information such as (but not limited to) population density (e.g., a density of people, animals, plants, objects, etc.), terrain details, land size, visibility, environmental conditions, and/or other characteristics regarding an identified landing zone may be obtained and used to determine if the landing zone is an appropriate landing zone (e.g., a safe landing zone). Based on this determination, information associated with the landing zone may be stored for later use. An example process for identifying and storing landing zones for a robotic vehicle is described in more detail with respect to method 500 (e.g., FIG. 5).

In block 406, the processor of the robotic vehicle may detect an emergency event requiring landing of the robotic vehicle during transit. Various events may require landing of the robotic vehicle such as (but not limited to) changes in environmental conditions, changes in details of the task or mission of the robotic vehicle, changes in the path of the robotic vehicle, battery issues, mechanical or electrical failures, or any other situations that make it unsafe or undesirable for the robotic vehicle to continue in its path, at least for a certain period of time. The determination of an emergency event may be made by the robotic vehicle itself (e.g., by the processor and/or other on-board equipment of the robotic vehicle), or may be based on receiving alerts or commands from a server, other robotic vehicles or another source communicatively coupled with the robotic vehicle.

As discussed, the robotic vehicle identifies and stores landing zones prior to and without any confirmation that an emergency event will necessarily occur. That is, the robotic vehicle identifies and stores landing zones in advance of an emergency event (if such an event occurs at all). In some examples, the robotic vehicle identifies and stores information associated with landing zones based on various criteria or triggers. In such examples, while triggers or criteria may be used when determining whether to identify and/store landing zones, these criteria or triggers are independent from the detection of the emergency event. That is, in various embodiments, the robotic vehicle does not wait to detect an emergency event before monitoring for, identifying, and storing landing zones. Thus, landing zones are identified and stored prior to the detection of the emergency event in block 406.

In block 408, the processor of the robotic vehicle may access the stored landing zones in response to detecting the emergency event. In block 410, the processor of the robotic vehicle may select a landing zone from the stored landing zones. According to some embodiments, the selection of the landing zone may be based on the information associated with the landing zone, current conditions, and/or the event characteristics. Landing zone information, as described above, may include population density (e.g., a density of people, animals, plants, objects, etc.), terrain, land size, visibility, environmental conditions and/or other similar characteristics relating to the nature of the landing zone. Current conditions may include (but are not limited to) a current status of the robotic vehicle (e.g., battery level, mechanical and electrical status, etc.), time, location of the robotic vehicle, current environmental conditions, etc. Event characteristics may include the type of the event, the source of the event, the urgency of the event, etc.

Based on these criteria, in block 410, the processor of the robotic vehicle may select an appropriate landing zone for landing in response to the emergency event. In some examples, the most appropriate landing zone may be the landing zone having the most optimal conditions with respect to the current conditions. For example, where the emergency event is urgent and requires immediate landing, the most optimal landing zone may be the landing zone that is closest and meets minimum safety requirements. In another example, where the emergency event is not as urgent, the most optimal landing zone may be the landing zone having the highest safety score. A safety score may be calculate based on the information for each landing zone as described in more detail above. Therefore, in some embodiments, a selection is made by the processor of the robotic vehicle based on the characteristics of the landing zones, the current conditions, and/or characteristics of the event.

In block 412, the processor of the robotic vehicle controls the robotic vehicle to land at the selected landing zone after the landing zone has been selected. Certain embodiments may thus enable the robotic vehicle processor to identify a landing zone before an emergency event for landing of the robotic vehicle if or when the emergency event occurs.

FIG. 5 illustrates an example method 500 for identifying and storing landing zones for a robotic vehicle in association with a trip, according to various embodiments. The method 500 includes operations that may be performed as part of determination blocks 402 and/or 404 (FIG. 4). With reference to FIGS. 1-5, the method 500 may be implemented in hardware components and/or software components of the robotic vehicle (e.g., 102, 200), the operation of which may be controlled by one or more processors (e.g., the processor 220, 310, 314 and/or the like) of the robotic vehicle.

In block 502, the processor of the robotic vehicle may monitor for landing zones while in transit. For example, the robotic vehicle may be travelling through a path. In some embodiments, the robotic vehicle may have a predefined path for travel. In another example, the path may be determined based on various criteria as the robotic vehicle is in transit.

While the robotic vehicle is travelling through the path, the processor of the robotic vehicle may monitor for potential landing zones. In some examples, the monitoring may occur continuously or based on certain criteria. In some examples, the frequency of monitoring may also be determined based on same or different criteria. These criteria may be user- or system-defined criteria and may include various triggers or conditions. In some examples, the robotic vehicle may determine when to begin and/or stop monitoring for landing zones based on detecting certain conditions. In various embodiments, similar or different condition may determine the frequency at which to monitor for landing zones. For example, the robotic vehicle may detect certain conditions that may cause the robotic vehicle to start and/or stop monitoring for potential landing zones and/or increase or decrease its monitoring frequency. The conditions may, for example, include circumstances that alert the robotic vehicle that the probability of the robotic vehicle needing to land is higher than a certain threshold. In some embodiments, the circumstances may include (but are not limited to) time or distance of travel, location, time of day, changes in environmental conditions, changes in the task or mission of the robotic vehicle, changes in the path of the robotic vehicle, and/or changes in the condition of the robotic vehicle itself (e.g., battery level, mechanical, electrical or system conditions, etc.).

Other criteria may also be defined either before or during transit, that may trigger monitoring or a pause in monitoring for landing zones, and/or cause a change in the frequency of monitoring for landing zones. For example, the robotic vehicle may begin monitoring for landing zones as soon as the robotic vehicle begins transit at a certain frequency and may adjust the frequency at which the robotic vehicle monitors for landing zones during transit as the robotic vehicle detects different conditions. Alternatively, the robotic vehicle may begin monitoring after it has travelled a certain amount of time or distance and/or detected certain conditions and may then set a frequency and/or adjust its frequency of monitoring based on detected conditions. Monitoring for landing zones may include using sensors, cameras, and/or other equipment of the robotic vehicle to identify landing zones. In some example, landing zones may also be received at the robotic vehicle from a remote source such as a server or other robotic vehicles. In other examples, the robotic vehicle may also have access to historical landing zones and may access the historical landing zones when monitoring for landing zones.

In block 504, the processor the robotic vehicle may identify a landing zone appropriate for landing. In some embodiments, while monitoring for landing zones, the processor of the robotic vehicle identifies a landing zone appropriate for landing. For example, a landing zone may be determined to be appropriate for landing if it meets certain criteria, such as safety requirements. In some examples, the landing zones may be identified using camera, sensors, or other equipment of the robotic vehicle. In another example, the landing zone may be received from a server or other robotic vehicles. In another example, the landing zone may be selected from among a set of historical landing zones.

In some embodiments, identifying a landing zone includes the processor of the robotic vehicle identifying one or more potential landing zones while monitoring for landing zones in block 502 and identifying a landing zone in block 504 by determining that the landing zone meets certain requirements. For example, the robotic vehicle may determine if the identified landing zone meets threshold safety requirements such as (but not limited to) population density (e.g., a density of people, animals, plants, objects, etc.), terrain, land size, visibility, environmental conditions and/or other characteristics that make the landing zone appropriate for landing in case of an event that requires landing of the robotic vehicle. In one example, if the robotic vehicle meets the threshold criteria the identified zone may be designated as a safe landing zone. In one example, characteristics of the landing zone may be used to determine a safety score or indication for the landing zone and the landing zone may be determined to be an appropriate or safe landing zone when it has a safety score or indication that meets a threshold safety score or indication. In some examples, the safety score or indication may also be stored along with the landing zone.

In some examples, only a specific number of landing zones may be stored with association with a trip at any given time. In such embodiments, in determination block 506, the processor of the robotic vehicle may determine if one or more other landing zones are already stored in association with the current trip. In some embodiments, if there are no other landing zones stored (i.e., determination block 506 = "No"), the processor of the robotic vehicle may store the landing zone in association with the trip, in block 514. According to some embodiments, in block 514, the processor of the robotic vehicle stores an identifier of the landing zone in storage for later retrieval. In some examples, information associated with the landing zone such as population density (e.g., a density of people, animals, plants, objects, etc.), terrain, land size, visibility, environmental conditions, and/or other characteristics of the landing zones may also be stored in association with the landing zone identifier.

On the other hand, if one or more other landing zones are already stored (i.e., determination block 506 = "Yes"), in determination block 508, the processor of the robotic vehicle may determine if the number of landing zones already stored is above a threshold number of landing zones. If the threshold number of landing zones is not stored, (i.e., determination block 508 = "No"), the processor of the robotic vehicle may store the landing zone in association with the trip, in block 514. Otherwise, (i.e., determination block 508 = "Yes"), in block 510, the processor of the robotic vehicle may compare the identified landing zone to the one or more stored landing zones to determine if the identified landing zone is more appropriate for landing the robotic vehicle and therefore should replace one or more of the store landing zones.

Comparison of the landing zones in block 510 may be based on several safety criteria such as (but not limited to) location, population density, terrain, land size, visibility, environmental conditions, or other characteristics that may indicate the condition of the landing zone and whether it is appropriate for landing of a robotic vehicle. If, based on the comparison, in block 512, it is determined that the identified landing zone is more optimal for landing than at least one stored landing zone (i.e., determination block 512 = "Yes"), the landing zone is stored in association with the trip in block 514. If the landing zone is determined to not be as optimal as the other landing zones already stored (i.e., determination block 512 = "No") and/or after storing the landing zone in block 514 the processor of the robotic vehicle may return to block 502 and continue monitoring for landing zones. According to some embodiments, the processor of the robotic vehicle continuously monitors for landing zones while in transit in concurrence with performing one or more of the steps of process 400 and/or 500.

In other examples, the processor of the robotic vehicle may store any identified landing zones that have certain characteristics that make them optimal for landing the robotic vehicle (e.g., a certain safety score). In such examples, after identifying the landing zone in block 504, the processor of the robotic vehicle stores the landing zones in association with the trip in block 514.

In some examples, the stored landing zones may be periodically updated such that only landing zones that are appropriate for landing with the current condition of the robotic vehicle are maintained within storage (e.g., those within the vicinity of the landing zone with certain conditions). Current conditions may include current status of the robotic vehicle (e.g., battery level, mechanical and electrical status, etc.), time, location of the robotic vehicle, current environmental conditions, etc.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods 400, and 500 may be substituted for or combined with one or more operations of the methods 400, and 500, and vice versa.

The foregoing method descriptions and the process flow diagrams are provided merely as illustrative examples and are not intended to require or imply that the operations of various embodiments must be performed in the order presented. As will be appreciated by one of skill in the art the order of operations in the foregoing embodiments may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

Various illustrative logical blocks, modules, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of the claims.

The hardware used to implement various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver smart objects, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more aspects, the functions described may be implemented in hardware, software, firmware, or any combination thereof. If implemented in software, the functions may be stored as one or more instructions or code on a non-transitory computer-readable storage medium or non-transitory processor-readable storage medium. The operations of a method or algorithm disclosed herein may be embodied in a processor-executable software module or processor-executable instructions, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage smart objects, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

The preceding description of the disclosed embodiments is provided to enable any person skilled in the art to make or use the claims. Various modifications to these embodiments will be readily apparent to those skilled in the art, and the generic principles defined herein may be applied to other embodiments without departing from the scope of the present invention defined by the appended claims.

## Claims

1. A method (400) of identifying landing zones for landing of a robotic vehicle (200), comprising:
identifying (402), by a processor (220) of the robotic vehicle, one or more landing zones for landing while in transit;
obtaining (404), by the processor, information associated with the one or more landing zones;
detecting (406), by the processor, an emergency event requiring landing of the robotic vehicle while in transit;
accessing (408), by the processor, the one or more identified landing zones in response to the determined emergency event;
selecting (410), by the processor, a landing zone from the one or more identified landing zones for landing the robotic vehicle; and
controlling (412), by the processor, the robotic vehicle to land at the selected landing zone,
wherein identifying one or more landing zones comprises monitoring for one or more landing zones using one or more onboard sensors or cameras of the robotic vehicle while in transit,
wherein the identifying and the obtaining the one or more landing zones occurs before the detecting the emergency event; and
**characterised in that**
identifying one or more landing zones comprises monitoring for one or more landing zones while in transit at a specific frequency, wherein said specific frequency is set and then adjusted based on conditions detected by the robotic vehicle, said conditions include circumstances that alert the robotic vehicle that the probability of the robotic vehicle needing to land is higher than a certain threshold.

2. The method (400) of claim 1, wherein identifying one or more landing zones comprises identifying a safe landing zone that meets a threshold safety requirement.

3. The method (400) of claim 2, wherein identifying a safe landing zone comprises:
determining one or more characteristics of the landing zone; and
determining if the characteristics of the landing zone meet the threshold safety requirement.

4. The method (400) of claim 3, wherein the one or more characteristics comprise one or more of population density, terrain details, visibility, environmental conditions, and size.

5. The method (400) of claim 1, wherein identifying one or more landing zones further comprises receiving one or more potential landing zones from one or more of a remote server and another robotic vehicle.

6. The method (400) of claim 1, wherein identifying one or more landing zones further comprises retrieving one or more historical landing zones associated with a similar trip.

7. The method (400) of claim 1, wherein a threshold number of landing zones are identified at any given time.

8. The method (400) of claim 1, further comprising updating the one or more identified landing zones.

9. The method (400) of claim 1, wherein selecting the landing zone comprises:
determining one or more characteristics for each of the one or more identified landing zones;
determining information regarding the emergency event;
determining information regarding current conditions; and
selecting one of the one or more identified landing zones based on one or more of the one or more characteristics of the one or more identified landing zones, the information regarding the emergency event, and information regarding current conditions.

10. The method (400) of claim 9, wherein information regarding the emergency event comprises one or more of an urgency and emergency type.

11. The method (400) of claim 1, wherein the robotic vehicle is travelling in a path of travel to reach a destination and wherein the landing zone is not a preplanned landing zone in the path of travel.

12. A robotic vehicle (200), comprising:
a processor (220) configured with processor-executable instructions to:
identify one or more landing zones for landing while the robotic vehicle is in transit;
obtain information associated with the one or more landing zones;
detect an emergency event requiring landing of the robotic vehicle while in transit;
access the one or more identified landing zones in response to the determined emergency event;
select a landing zone from the one or more identified landing zones for landing the robotic vehicle; and
control the robotic vehicle to land at the selected landing zone,
wherein identifying one or more landing zones comprises monitoring for one or more landing zones using one or more onboard sensors or cameras of the robotic vehicle while in transit,
wherein the identifying and the obtaining the one or more landing zones occurs before the detecting the emergency event, and
wherein identifying one or more landing zones comprises monitoring for one or more landing zones while in transit at a specific frequency, wherein said specific frequency is set and then adjusted based on conditions detected by robotic vehicle, said conditions include circumstances that alert the robotic vehicle that the probability of the robotic vehicle needing to land is higher than a certain threshold..

13. The robotic vehicle (200) of claim 12, wherein the processor (220) is further configured with processor-executable instructions such that identifying one or more landing zones comprises identifying a safe landing zone that meets a threshold safety requirement.

14. The robotic vehicle (200) of claim 13, wherein the processor (220) is further configured with processor-executable instructions such that identifying a safe landing zone comprises determining one or more characteristics of the landing zone and determining if the characteristics of the landing zone meets the threshold safety requirement.

## Patentansprüche

1. Ein Verfahren (400) zum Identifizieren von Landezonen für das Landen eines Roboterfahrzeugs (200), das Folgendes aufweist:
Identifizieren (402), durch einen Prozessor (220) des Roboterfahrzeugs, von einer oder mehreren Landezonen für das Landen während einer Fortbewegung;
Erlangen (404), durch den Prozessor, von Information, die mit der einen oder den mehreren Landezonen assoziiert ist;
Detektieren (406), durch den Prozessor, eines Notfallereignisses, das Landen des Roboterfahrzeugs während der Fortbewegung erfordert;
Zugreifen (408), durch den Prozessor, auf die eine oder die mehreren identifizierten Landezonen ansprechend auf das bestimmte Notfallereignis;
Auswählen (410), durch den Prozessor, einer Landezone von der einen oder den mehreren identifizierten Landezonen für das Landen des Roboterfahrzeugs; und
Steuern (412), durch den Prozessor, des Roboterfahrzeugs an der ausgewählten Landezone zu landen,
wobei Identifizieren von einer oder mehreren Landezonen Prüfen hinsichtlich einer oder mehreren Landezonen unter Nutzung von einem oder mehreren an Bord befindlichen Sensoren oder Kameras des Roboterfahrzeugs während der Fortbewegung aufweist,
wobei das Identifizieren und das Erlangen der einen oder mehreren Landezonen vor dem Detektieren des Notfallereignisses auftritt; und
**dadurch gekennzeichnet, dass**
Identifizieren von einer oder mehreren Landezonen Prüfen hinsichtlich einer oder mehreren Landezonen während der Fortbewegung mit einer spezifischen Frequenz aufweist, wobei die spezifische Frequenz festgelegt ist und dann angepasst wird basierend auf Bedingungen, die durch das Roboterfahrzeug detektiert werden, wobei die Bedingungen Umstände umfassen, die das Roboterfahrzeug darauf hinweisen, dass die Wahrscheinlichkeit, dass das Roboterfahrzeug landen muss, höher als ein bestimmter Schwellenwert ist.

2. Verfahren (400) nach Anspruch 1, wobei das Identifizieren von einer oder mehreren Landezonen Identifizieren einer sicheren Landezone aufweist, die eine Schwellenwertsicherheitsanforderung erfüllt.

3. Verfahren (400) nach Anspruch 2, wobei das Identifizieren einer sicheren Landezone Folgendes aufweist:
Bestimmen von einer oder mehreren Charakteristiken der Landezone; und Bestimmen, ob die Charakteristiken der Landezone die Schwellenwertsicherheitsanforderung erfüllen.

4. Verfahren (400) nach Anspruch 3, wobei die eine oder die mehreren Charakteristiken eines oder mehreres von einer Bevölkerungsdichte, Geländedetails, Sichtverhältnisse, Umweltbedingungen und Größe aufweisen.

5. Verfahren (400) nach Anspruch 1, wobei Identifizieren von einer oder mehreren Landezonen weiter Empfangen von einer oder mehreren potenziellen Landezonen von einem oder mehreren von einem entfernten Server und einem anderen Roboterfahrzeug aufweist.

6. Verfahren (400) nach Anspruch 1, wobei Identifizieren von einer oder mehreren Landezonen weiter Abrufen von einer oder mehreren historischen Landezonen aufweist, die mit einer ähnlichen Reise assoziiert sind.

7. Verfahren (400) nach Anspruch 1, wobei eine Schwellenwertanzahl von Landezonen zu jeder gegebenen Zeit identifiziert wird.

8. Verfahren (400) nach Anspruch 1, das weiter Aktualisieren der einen oder mehreren identifizierten Landezonen aufweist.

9. Verfahren (400) nach Anspruch 1, wobei Auswählen der Landezone Folgendes aufweist:
Bestimmen von einer oder mehreren Charakteristiken für jede der einen oder mehreren identifizierten Landezonen;
Bestimmen von Information bezüglich des Notfallereignisses;
Bestimmen von Information bezüglich aktueller Bedingungen; und
Auswählen von einer der einen oder mehreren identifizierten Landezonen basierend auf einer oder mehreren der einen oder mehreren Charakteristiken der einen oder mehreren identifizierten Landezonen, der Information bezüglich des Notfallereignisses und Information bezüglich aktuellen Bedingungen.

10. Verfahren (400) nach Anspruch 9, wobei Information bezüglich des Notfallereignisses eines oder mehreres von einer Dringlichkeit und einem Notfalltyp aufweist.

11. Verfahren (400) nach Anspruch 1, wobei sich das Roboterfahrzeug auf einem Reisepfad zum Erreichen eines Ziels fortbewegt, und wobei die Landezone keine vorgeplant Landezone auf dem Reisepfad ist.

12. Ein Roboterfahrzeug (200), das Folgendes aufweist:
einen Prozessor (220), der mit von einem Prozessor ausführbaren Instruktionen konfiguriert ist zum:
Identifizieren von einer oder mehreren Landezonen für das Landen während das Roboterfahrzeug sich fortbewegt bzw. unterwegs ist;
Erlangen von Information, die mit der einen oder den mehreren Landezonen assoziiert ist;
Detektieren eines Notfallereignisses, das Landen des Roboterfahrzeugs während der Fortbewegung erfordert;
Zugreifen auf die eine oder die mehreren identifizierten Landezonen ansprechend auf das bestimmte Notfallereignis;
Auswählen einer Landezone von der einen oder den mehreren identifizierten Landezonen für das Landen des Roboterfahrzeugs; und
Steuern des Roboterfahrzeugs an der ausgewählten Landezone zu landen, wobei Identifizieren von einer oder mehreren Landezonen Prüfen hinsichtlich einer oder mehreren Landezonen unter Nutzung von einem oder mehreren an Bord befindlichen Sensoren oder Kameras des Roboterfahrzeugs während der Fortbewegung aufweist,
wobei das Identifizieren und das Erlangen der einen oder mehreren Landezonen vor dem Detektieren des Notfallereignisses auftritt; und
wobei Identifizieren von einer oder mehreren Landezonen Prüfen hinsichtlich einer oder mehreren Landezonen während der Fortbewegung mit einer spezifischen Frequenz aufweist, wobei die spezifische Frequenz festgelegt ist und dann angepasst wird basierend auf Bedingungen, die durch das Roboterfahrzeug detektiert werden, wobei die Bedingungen Umstände umfassen, die das Roboterfahrzeug darauf hinweisen, dass die Wahrscheinlichkeit, dass das Roboterfahrzeug landen muss, höher als ein bestimmter Schwellenwert ist.

13. Roboterfahrzeug (200) nach Anspruch 12, wobei der Prozessor (220), weiter konfiguriert ist mit von einem Prozessor ausführbaren Instruktionen, so dass Identifizieren von einer oder mehreren Landezonen Identifizieren einer sicheren Landezone aufweist, die eine Schwellenwertsicherheitsanforderung erfüllt.

14. Roboterfahrzeug (200) nach Anspruch 13, wobei der Prozessor (220) weiter mit von einem Prozessor ausführbaren Instruktionen konfiguriert ist, so dass Identifizieren einer sicheren Landezone Bestimmen von einer oder mehreren Charakteristiken der Landezone aufweist und Bestimmen, ob die Charakteristik der Landezone die Schwellenwertsicherheitsanforderung erfüllt.

## Revendications

1. Procédé (400) d'identification de zones d'atterrissage pour l'atterrissage d'un véhicule robotisé (200), comprenant :
l'identification (402), par un processeur (220) du véhicule robotisé, d'une ou de plusieurs zones d'atterrissage pour l'atterrissage pendant un déplacement ;
l'obtention (404), par le processeur, d'informations associées aux une ou plusieurs zones d'atterrissage ;
la détection (406), par le processeur, d'un événement d'urgence nécessitant l'atterrissage du véhicule robotisé pendant son déplacement ;
l'accès (408), par le processeur, aux une ou plusieurs zones d'atterrissage identifiées en réponse à l'événement d'urgence déterminé ;
la sélection (410), par le processeur, d'une zone d'atterrissage parmi les une ou plusieurs zones d'atterrissage identifiées pour faire atterrir le véhicule robotisé ; et
la commande (412), par le processeur, du véhicule robotisé pour qu'il atterrisse au niveau de la zone d'atterrissage sélectionnée,
dans lequel l'identification des une ou plusieurs zones d'atterrissage comprend la surveillance d'une ou de plusieurs zones d'atterrissage à l'aide d'un ou de plusieurs capteurs ou caméras embarqués du véhicule robotisé pendant le déplacement,
dans lequel l'identification et l'obtention des une ou plusieurs zones d'atterrissage survient avant la détection de l'événement d'urgence ; et
**caractérisé en ce que**
l'identification des une ou plusieurs zones d'atterrissage comprend la surveillance d'une ou de plusieurs zones d'atterrissage pendant le déplacement à une fréquence particulière dans lequel la fréquence particulière est fixée puis réglée sur la base de conditions détectées par le véhicule robotisé, lesdites conditions comportent des circonstances qui préviennent le véhicule robotisé que la probabilité que le véhicule robotisé ai besoin d'atterrir est supérieure à un seuil donné.

2. Procédé (400) selon la revendication 1, dans lequel l'identification d'une ou de plusieurs zones d'atterrissage comprend l'identification d'une zone d'atterrissage sûre qui satisfait à une exigence de sécurité seuil.

3. Procédé (400) selon la revendication 2, dans lequel l'identification d'une zone d'atterrissage sûre comprend :
la détermination d'une ou de plusieurs caractéristiques de la zone d'atterrissage ; et
la détermination de si les caractéristiques de la zone d'atterrissage satisfont à l'exigence de sécurité seuil.

4. Procédé (400) selon la revendication 3, dans lequel les une ou plusieurs caractéristiques comprennent une ou plusieurs parmi la densité de population, les détails du terrain, la visibilité, les conditions environnementales et la taille.

5. Procédé (400) selon la revendication 1, dans lequel l'identification d'une ou de plusieurs zones d'atterrissage comprend en outre la réception d'une ou plusieurs zones d'atterrissage possibles à partir d'un ou de plusieurs parmi un serveur distant et un autre véhicule robotisé.

6. Procédé (400) selon la revendication 1, dans lequel l'identification d'une ou de plusieurs zones d'atterrissage comprend en outre la récupération d'une ou de plusieurs zones d'atterrissage historiques associées à un voyage similaire.

7. Procédé (400) selon la revendication 1, dans lequel un nombre seuil de zones d'atterrissage sont identifiées à un quelconque instant donné.

8. Procédé (400) selon la revendication 1, comprenant en outre la mise à jour des une ou plusieurs zones d'atterrissage identifiées.

9. Procédé (400) selon la revendication 1, dans lequel la sélection de la zone d'atterrissage comprend :
la détermination d'une ou de plusieurs caractéristiques pour chacune des une ou plusieurs zones d'atterrissage identifiées ;
la détermination d'informations concernant l'événement d'urgence ;
la détermination d'informations concernant les conditions actuelles ; et
la sélection de l'une des une ou plusieurs zones d'atterrissage identifiées sur la base d'une ou de plusieurs des une ou plusieurs caractéristiques des une ou plusieurs zones d'atterrissage identifiées, des informations concernant l'événement d'urgence et des informations concernant les conditions actuelles.

10. Procédé (400) selon la revendication 9, dans lequel les informations concernant l'événement d'urgence comprennent un ou plusieurs parmi une urgence et un type d'urgence.

11. Procédé (400) selon la revendication 1, dans lequel le véhicule robotisé se déplace sur un trajet de déplacement pour atteindre une destination et dans lequel la zone d'atterrissage n'est pas une zone d'atterrissage pré-planifiée dans le trajet de déplacement.

12. Véhicule robotisé (200), comprenant :
un processeur (220) configuré avec des instructions exécutables par le processeur pour :
identifier une ou plusieurs zones d'atterrissage pour un atterrissage pendant que le véhicule robotisé est en déplacement ;
obtenir des informations associées aux une ou plusieurs zones d'atterrissage ;
détecter un événement d'urgence nécessitant l'atterrissage du véhicule robotisé pendant le déplacement ;
accéder aux une ou plusieurs zones d'atterrissage identifiées en réponse à l'événement d'urgence déterminé ;
sélectionner une zone d'atterrissage parmi les une ou plusieurs zones d'atterrissage identifiées pour faire atterrir le véhicule robotisé ; et
contrôler le véhicule robotisé pour qu'il atterrisse au niveau de la zone d'atterrissage sélectionnée,
dans lequel l'identification des une ou plusieurs zones d'atterrissage comprend la surveillance d'une ou de plusieurs zones d'atterrissage à l'aide d'un ou de plusieurs capteurs ou caméras embarqués du véhicule robotisé pendant le déplacement,
dans lequel l'identification et l'obtention des une ou plusieurs zones d'atterrissage survient avant la détection de l'événement d'urgence, et
dans lequel l'identification des une ou plusieurs zones d'atterrissage comprend la surveillance d'une ou de plusieurs zones d'atterrissage pendant le déplacement à une fréquence particulière, dans lequel la fréquence particulière est fixée puis réglée sur la base de conditions détectées par le véhicule robotisé, lesdites conditions comportent des circonstances qui préviennent le véhicule robotisé que la probabilité que le véhicule robotisé ai besoin d'atterrir est supérieure à un seuil donné.

13. Véhicule robotisé (200) selon la revendication 12, dans lequel le processeur (220) est en outre configuré avec des instructions exécutables par processeur de sorte que l'identification d'une ou de plusieurs zones d'atterrissage comprenne l'identification d'une zone d'atterrissage sûre qui satisfait à une exigence de sécurité seuil.

14. Véhicule robotisé (200) selon la revendication 13, dans lequel le processeur (220) est en outre configuré avec des instructions exécutables par processeur de sorte que l'identification d'une zone d'atterrissage sûre comprenne la détermination d'une ou de plusieurs caractéristiques de la zone d'atterrissage et la détermination de si les caractéristiques de la zone d'atterrissage satisfont à l'exigence de sécurité seuil.
